# EUROPÄISCHE PATENTSCHRIFT

(11) **EP 2 371 479 B1**
(45) Veröffentlichungstag und Bekanntmachung des Hinweises auf die Patenterteilung: **19.09.2012**
(21) Anmeldenummer: 11158509.7
(22) Anmeldetag: 16.03.2011
(51) Int. Cl.: B23Q 1/00

(54) **Zentrierelement, Spannbolzen, Trägerbauteil und Spannsystem**
Centering element, tensioning bolt, supporting element und tensioning system
Element de centrage, boulon de serrage, composant de support et système de serrage

(30) Priorität: 01.04.2010 DE 102010013912
(43) Veröffentlichungstag der Anmeldung: 05.10.2011
(73) Patentinhaber: Schunk GmbH & Co. KG Spann- und Greiftechnik, 74348 Lauffen am Neckar (DE)
(72) Erfinder: Schräder, Philipp, 88512 Mengen (DE); Kleiner, Markus, 88605 Messkirch (DE); Koch, Alexander, 88512 Mengen (DE); LeGuin, Hermann, 88279 Amtzell (DE)
(74) Vertreter: Dreiss

(56) Entgegenhaltungen:
- EP-A1- 0 827 806
- WO-A1-02/078898
- DE-C1- 19 917 005

## Beschreibung

Die Erfindung betrifft ein Zentrierelement für ein ein Spannmodul und ein Trägerbauteil umfassendes Spannsystem, insbesondere ein Nullpunktspannsystem, sowie ein Trägerbauteil, einen Spannbolzen und ein Spannsystem, welche das Zentrierelement umfassen.

Nullpunktspannsysteme sind aus dem Stand der Technik in vielfältiger Art und Weise vorbekannt. Sie sind dazu vorgesehen, Trägerbauteile, insbesondere Werkstückträger oder Paletten, wiederholgenau exakt an einer vorgegebenen Position zu fixieren. Die zu verwendenden Nullpunktspannmodule sehen dabei in der Regel eine Aufnahme vor, in welche der Spannbolzen eingeführt werden kann. Ferner sind Spannmittel vorgesehen, welche in einer radial inneren Lage gegen den Spannbolzen wirken und diesen in der Verriegelungslage fixieren. In einer radial äußeren Lage der Spannmittel kann der Spannbolzen aus dem Spannmodul herausgenommen werden.

Um ein exaktes Zentrieren des Spannbolzens gegenüber dem Spannmodul zu gewährleisten, weist der Spannbolzen in der Regel einen Konusabschnitt auf, der zur Anlage an einen spannmodulseitigen Gegenkonus kommt. Zudem sind am Spannbolzen Kraftangriffsabschnitte vorgesehen, der mit einer in axialer Richtung wirkenden Spannkraft beaufschlagbar ist. Hierdurch wird der Spannbolzen, beziehungsweise das am Spannbolzen angeordnete Trägerbauteil in axialer Richtung gegen die Oberseite des Spannmoduls beaufschlagt.

Solche Nullpunktspannsysteme sind beispielsweise bekannt aus der EP 1 707 307 A1.

Um ein exaktes, wiederholgenaues Einspannen des Spannbolzens am Spannmodul zu ermöglichen, ist erforderlich, dass dann, wenn der Konusabschnitt am Gegenkonusabschnitt anliegt, auch das Trägerbauteil, welches am Spannbolzen befestigt ist, an der Oberseite des Spannmoduls zum Anliegen kommt. Dies kann nur dann, wenn überhaupt, ermöglicht werden, wenn eine exakte Ausrichtung des Gegenkonusabschnitts beziehungsweise des Konusabschnitts zur Oberseite des Spannmoduls erreicht wird. Da dies in der Praxis nur schwerlich möglich ist, sind die bekannten Systeme geometrisch überbestimmt.

Um dem abzuhelfen, ist aus der DE 199 17 005 C1 vorbekannt, dass am Spannmodul die Gehäusewand im Bereich der Aufnahme axial federnd ausgebildet ist, so dass bei einem in die Aufnahme eingesetzten Spannbolzen eine elastische Verformung des axial federnden Bereichs der Aufnahme erreicht wird. Aus der WO 02/078898 A1 ist es ferner bekannt, einen federnden Bereich am Spannzapfen statt an der Aufspannplatte vorzusehen. Somit sind Spannmodule bekannt, wobei der Konusabschnitt derart in axialer Richtung elastisch nachgiebig ausgebildet ist, dass nach Anlage des Konusabschnitts am Gegenkonusabschnitt das Trägerbauteil aufgrund der Einzugskraft wenigstens bedingt weiter in axialer Richtung verlagerbar ist.

Der vorliegenden Erfindung liegt deshalb die Aufgabe zugrunde, ein Zentrierelement, sowie ein Trägerbauteil, einen Spannbolzen und ein Spannsystem, welche das Zentrierelement umfassen, bereitzustellen, wobei eine geometrische Überbestimmtheit ausgeschlossen und ein funktionssicheres und wiederhohlgenaues Spannen ermöglicht wird.

Die Erfindung wird gelöst durch ein Zentrierelement mit dem Merkmal des Anspruchs 1.

Das erfindungsgemäße Zentrierelement zeichnet sich folglich dadurch aus, dass der Konusabschnitt von parallel aufeinander liegenden Lamellen gebildet wird, deren radial außen liegenden, freien Stirnseiten, zur Anlage an den Gegenkonusabschnitt vorgesehen sind. Das Zentrierelement kann dabei am Spannmodul, am Spannbolzen und/oder am Trägerbauteil vorgesehen sein. Der Gegenkonusabschnitt ist dann am Spannmodul und/oder am Trägerbauteil angeordnet.

Entscheidend ist, dass beim Aufeinander-Zu-Bewegen des Trägerbauteils und des Spannmoduls vor einem Anliegen des Trägerbauteils am Spannmodul der Konusabschnitt in Berührkontakt mit dem Gegenkonusabschnitt kommt. Aufgrund der Nachgiebigkeit des Konusabschnitts kann dieser beim Verriegeln des Trägerbauteils mit dem Spannmodul in axialer Richtung nachgeben, wodurch ein großflächiges und vollständiges Anliegen des Trägerbauteils an der Oberseite des Spannmoduls erreicht werden kann, ohne dass es zu einer geometrischen Überbestimmung kommt.

Das Vorsehen des Zentrierelements, insbesondere am Spannbolzen, hat den Vorteil, dass herkömmliche Spannmodule mit unterschiedlichen Spannbolzen Verwendung finden können. Für Spannaufgaben, welche eine gewisse Überbestimmung der Anlagegenauigkeit des Spannbolzens im Spannmodul erlauben, können herkömmliche Spannbolzen Verwendung finden. Bei hochexakten Spannaufgaben, können hingegen erfindungsgemäße Spannbolzen unter Verwendung von bekannten Spannmodulen eingesetzt werden.

Aufgrund der aufeinander liegenden Lamellen werden diese in der Verriegelungslage weitestgehend parallel elastisch nachgiebig verformt. Aufgrund der vergleichsweise geringen Dicken der Lamellen ist eine elastische Nachgiebigkeit in axialer Richtung gewährleistet, wobei in radialer Richtung eine sehr hohe Steifigkeit gegeben ist. Insofern kann hierdurch in vorteilhafter Weise eine hohe radiale Steifigkeit bei dennoch günstiger axialer Nachgiebigkeit erreicht werden.

Es hat sich gezeigt, dass eine elastische Nachgiebigkeit im Bereich von 1/100 mm bis 1/10 mm ausreichend ist, um die Oberbestimmtheit des Systems auszuschalten.

Vorzugsweise haben die einzelnen Lamellen eine Dicke im Bereich von 0,1 mm bis 1,5 mm und insbesondere im Bereich von 0,3 mm bis 0,7 mm und weiter insbesondere etwa 0,5 mm.

Ferner liegt die Anzahl der vorgesehenen Lamellen insbesondere im Bereich von 15 bis 20, vorzugsweise im Bereich von 8 bis 15 und weiter vorzugsweise im Bereich von 10 bis 12.

Je nach Höhe der wirkenden Spannkraft kann eine entsprechende Anzahl von Lamellen mit einer entsprechenden Dicke Verwendung finden.

Die Lamellen sind vorzugsweise jeweils ringartig ausgebildet und weisen ein zentrales Loch, in welche ein Bolzen zur Halterung der Lamellen eingreifen kann.

Dann, wenn das Zentrierelement am Spannbolzen vorgesehen ist, ist denkbar, dass der Spannbolzen ein Grundteil und ein mit dem Grundteil gefügtes Spannteil aufweist, wobei die Lamellen wenigstens abschnittsweise zwischen dem Grundteil und dem Spannteil angeordnet sind. Vorzugsweise sind das Grundteil und das Spannteil als rotationssymmetrische Teile ausgebildet, diebeispielsweise miteinander verschraubt sein können. Am Spannteil ist dann vorzugsweise der Kraftangriffsabschnitt und am Grundteil ein Fügeabschnitt, beispielsweise ein Gewinde, zur Anordnung des Spannbolzens an dem Trägerbauteil, beispielsweise einem Werkstückhalter oder eine Palette, vorgesehen.

Die einzelnen Lamellen sind vorzugsweise ringartig ausgebildet und weisen jeweils ein zentrales Loch auf, wobei das Grundteil und/oder das Spannteil die Löcher durchgreift. Beispielsweise können die Lamellen auf das Grundteil aufgesetzt werden. Zur Fixierung der Lamellen kann dann das Grundteil mit dem Spannteil gefügt, insbesondere verschraubt, werden.

Um eine geeignete elastische Nachgiebigkeit der Lamellen zu erreichen, ist vorteilhaft, wenn das Spannteil eine großflächige Auflagefläche zur Auflage der dem Spannteil zugewandten Lamelle aufweist, wobei die Auflagefläche eine radial äußere Kontur vorsieht, und wenn das Grundteil eine bezüglich der äußeren Kontur weiter radial innen liegende, im Wesentlichen ringartige Anlagefläche vorsieht, um welche die der Anlagefläche zugewandte Lamelle elastisch nachgiebig verformbar ist. Da die einzelnen Lamellen parallel zueinander angeordnet sind, erfolgt hierdurch eine Parallelverformung zumindest der radial außen liegenden Abschnitte der Lamellen.

Bei Anordnung der Lamellen ist zum Erhalt der konusartigen Mantelfläche erforderlich, dass der Außendurchmesser der unteren, sprich der dem Kraftangriffsabschnitt zugewandten Lamelle, kleiner ist als der oberen, sprich der dem Kraftangriffsabschnitt abgewandten Lamelle. Die zwischen der untersten und der obersten Lamelle liegenden Lamellen weisen dann Außendurchmesser auf, die geringfügig ansteigend sind, so dass sich eine konusförmige Mantelfläche ergibt. Denkbar ist, dass die außen liegenden, freien Stirnseiten der Lamellen nachbearbeitet werden, um eine exakt konusförmige Mantelfläche zu erhalten.

Die eingangs genannte Aufgabe wird, wie bereits angesprochen, auch durch ein Trägerbauteil gelöst, das ein erfindungsgemäßes Zentrierelement aufweist. Das Zentrierelement ist dabei vorzugsweise nicht am Spannbolzen, sondern davon separat am Trägerbauteil angeordnet.

Die eingangs genannte Aufgabe wird außerdem durch ein Spannsystem, insbesondere ein Nullpunktspannsystem, gelöst, welches ein Spannmodul und einen erfindungsgemäßen Spannbolzen aufweist, wobei das Spannmodul eine Bolzenaufnahme zur Aufnahme des Spannbolzens vorsieht.

Weitere Einzelheiten und vorteilhafte Ausgestaltungen der Erfindung sind der nachfolgenden Beschreibung zu entnehmen, anhand derer zwei Ausführungsbeispiele der Erfindung näher beschrieben und erläutert sind.

Es zeigen:
- Figur 1: eine Teilansicht eines Längsschnitts durch ein erfindungsgemäßes Spannsystem mit einem erfindungsgemäßen Spannbolzen;
- Figur 2: eine perspektivische Ansicht eines zweiten erfindungsgemäßen Bolzens;
- Figur 3: einen Längsschnitt durch den Bolzen gemäß Figur 2;
- Figur 4: einen vergrößerten Ausschnitt des Bereichs IV in Figur 3;
- Figur 5: eine Lamelle in Draufsicht und in perspektivischer Ansicht;
- Figur 6: zwei Einzelteile des Spannbolzens gemäß Figur 2; und
- Figur 7: einen Ausschnitt aus einem zwei Zentrierelemente aufweisendem Trägerbauteil.

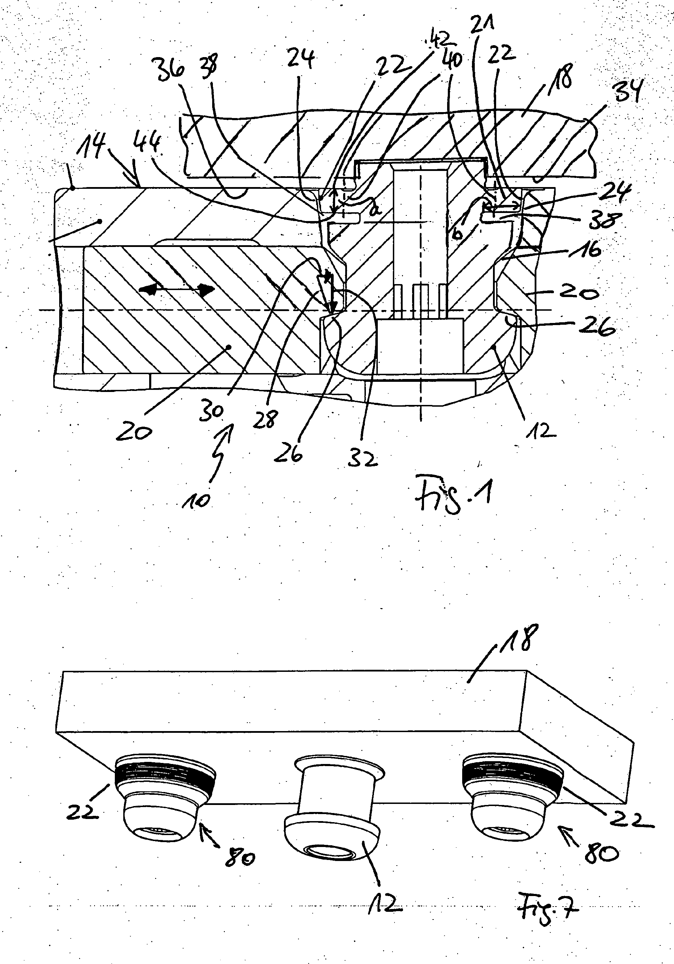

In der Figur 1 ist ein Teilausschnitt eines Längsschnitts durch ein erfindungsgemäßes Nullpunktspannsystem 10 gezeigt. Das Spannsystem 10 umfasst einen Spannbolzen 12 und ein Spannmodul 14, welches allerdings nur ausschnittsweise dargestellt ist. Das Spannmodul 14 umfasst eine zentrale Bolzenaufnahme 16, in welche der Spannbolzen 12 eingreift. Der Spannbolzen 12 ist an seiner Oberseite mit einem Trägerbauteil 18, beispielsweise einer Palette, fest verbunden, auf welcher beispielsweise zu bearbeitende Werkstücke angeordnet sein können. Im Spannmodul 14 sind Spannmittel in Form von zwei aufeinander zu und voneinander weg bewegbaren Spannschiebern 20 vorgesehen. Bei anderen Ausführungsformen der Erfindung können diese Spannschieber 20 auch als Spannkugeln oder sonstige Bauteile realisiert sein.

Der Spannbolzen 12 weist ein Zentrierelement 21 mit einem Konusabschnitt 22 auf, welcher in einer Verriegelungslage an einem spannmodulseitigen Gegenkonusabschnitt 24 zur Anlage kommt.

Der Spannbolzen 12 sieht ferner einen Kraftangriffsabschnitt 26 vor, der als umlaufende Konusfläche ausgebildet ist. Gegen den Kraftantriebsabschnitt 26 wirken beim Verriegeln des Spannbolzens 12 im Spannmodul 14 die beiden Spannschieber 20. Insgesamt wird der Spannbolzen 12 hierdurch mit einer Einspannkraft 28 beaufschlagt, welche eine in radialer Richtung wirkende Komponente 30 und eine in axialer Richtung wirkende Kraftkomponente 32 in Form der eigentlichen Spannkraft aufweist. Aufgrund der in axialer Richtung wirkenden Spannkraft 32 wird folglich beim Aufeinander-Zu-Verfahren der Spannschieber 20 der Spannbolzen 12 nach axial unten verlagert.

In der in Figur 1 dargestellten Position befindet sich der Spannbolzen 12 kurz vor seiner Verriegelungsendlage. Wie aus Figur 1 deutlich wird, besteht noch kein Berührkontakt zwischen dem Konusabschnitt 22 und dem Gegenkonusabschnitt 24. Ebenso liegt die Unterseite 34 des Trägerbauteils 18 nicht an der Oberseite 36 des Spannmoduls 14 an.

Beim weiteren Aufeinander-Zu-Bewegen der Spannschieber 20 wird der Spannbolzen 12 weiter in axialer Richtung in das Spannmodul 14 eingezogen. Damit kommt dann zunächst der Konusabschnitt 22 in Berührkontakt mit dem Gegenkonusabschnitt 24. Die Unterseite 34 des Trägerbauteils 18 liegt dabei noch nicht oder nur unvollständig an der Oberseite 36 des Spannmoduls 14 an.

Aufgrund eines am Spannbolzen 12 vorgesehenen, eine Ringnut bildenden Einstichs 38 ist der Konusabschnitt 22 in axialer Richtung derart nachgiebig ausgebildet, dass beim weiteren Aufeinander-Zu-Bewegen der Spannschieber 20 der Spannbolzen 12 so weit in axialer Richtung in die Bolzenaufnahme 16 eintaucht, bis die Unterseite 34 des Trägerbauteils 18 an der Oberseite 36 des Spannmoduls 14 vollständig zum Anliegen kommt. Ein elastisches Verformen beziehungsweise Auslenken des Konusabschnitts 22 erfolgt im Bereich der in Figur 1 angedeuteten, auf einer Kreisbahn liegenden Biegelinie 40.

Insgesamt kann damit das Trägerbauteil 18 eindeutig und nicht überbestimmt am Spannmodul 14 gespannt werden.

Wie aus Figur 1 deutlich wird, wird der Konusabschnitt 22 an seiner Ober- und an seiner Unterseite von zwei im Wesentlichen parallel zueinander verlaufenden Flächen 42 und 44 begrenzt. Das Verhältnis des Abstands a der beiden Flächen zur Radialerstreckung b des Konusabschnitts 22 in einer zwischen den Flächen 42 und 44 liegenden mittleren Ebene liegt bei der Ausführungsform gemäß Figur 1 im Bereich von 1:2. Bei Vorsehen eines Spannbolzens 12 aus metallischem Material hat sich dieses Verhältnis als geeignet erwiesen.

Wie ebenfalls aus Figur 1 deutlich wird, ist der Spannbolzen 12 einstückig samt Konusabschnitt 22 und
Kraftübertragungsabschnitt 26 ausgebildet.

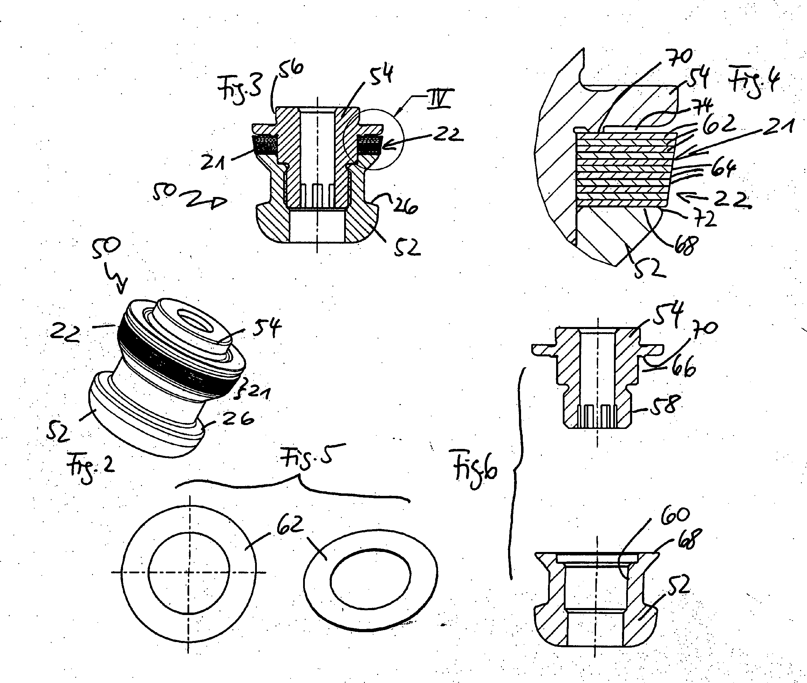

Anstelle eines einstückigen Spannbolzens 12, wie er in Figur 1 dargestellt ist, kann ein mehrteiliger Spannbolzen 50, wie er in den Figuren 2 und 3 dargestellt ist, Verwendung finden.

Wie aus insbesondere dem Schnitt gemäß Figur 3 deutlich wird, besteht der Spannbolzen 50 aus einem Spannteil 52, an welchem der Kraftübertragungsabschnitt 26 vorgesehen ist sowie einem Grundteil 54, welches einen Fügeabschnitt 56 zur Anordnung an dem Trägerbauteil 18 vorsieht. Das Spannteil 52 sowie das Grundteil 54 sind jeweils im Wesentlichen rotationssymmetrisch ausgebildet. Das Grundteil 54 sieht ein Außengewinde 58 vor. Das Spannteil 52 sieht ein Innengewinde 60 vor, in welches das Außengewinde 58 einschraubbar ist.

Wie insbesondere aus den Figuren 2, 3 und 4 deutlich wird, umfasst der Spannbolzen 50 mehrere übereinander angeordnete Lamellen 62, welche jeweils aus einer Ringscheibe, wie sie in Figur 5 dargestellt ist, bestehen. Das den Konusabschnitt 22 aufweisende Zentrierelement 21 wird folglich bei dieser Ausführungsform von den parallel aufeinander liegenden Lamellen 62 gebildet, deren radial außen liegenden, freien Stirnseiten 64 zur Anlage an den Gegenkonusabschnitt 24, wie er in Figur 1 gezeigt ist, vorgesehen sind.

Die einzelnen Lamellen 62 sind vorzugsweise 0,5 mm breit. Vorzugsweise sind insgesamt zehn bis 12 Lamellen vorgesehen.

Zur Montage des Spannbolzens 50 werden die Lamellen 62 zunächst auf einen am Grundteil 54 vorgesehenen Lamellenaufnahmeabschnitt 66 aufgeschoben. Das Grundteil 54 wird dann mit dem Spannteil 52 verschraubt. Wie aus Figur 4 deutlich wird, liegt dann die unterste Lamelle 62 an einer großflächigen Auflagefläche 68 am Spannteil 52 auf. Die oberste Lamelle 62 wird von einer ringartigen Anlagefläche 70 des Grundteils 54 beaufschlagt. Die Anlagefläche 70 liegt dabei vergleichsweise weit radial innen, insbesondere weiter radial innen als die äußere Kontur der obersten Lamelle 62. Dadurch soll ausreichend Freiraum 74 zur Verfügung gestellt werden, so dass sich diese Lamellen 62 bei Anlage am Gegenkonusabschnitt 24 in der Verriegelungslage elastisch nachgiebig nach oben verformen können. Die Lamellen 62 werden folglich in der Verriegelungslage aus ihrer in der Figur 4 dargestellten Lage im Wesentlichen parallel verformt.

Wie ebenfalls aus Figur 4 deutlich wird, wird der Konusabschnitt 22 von den die Mantelfläche bildenden Stirnseiten 64 der Lamellen 62 gebildet. Das heißt, dass die unterste, auf dem Auflageabschnitt 68 anliegende Lamelle 62 einen geringeren Durchmesser aufweist als die oberste Lamelle 62, die an der Anlagefläche 70 anliegt. Der Durchmesser der zwischen diesen beiden Lamellen 62 liegenden Lamellen 62 nimmt dann nach oben hin geringfügig zu.

Nach der Montage des Spannbolzens 50 kann dieser im Bereich des Konusabschnitts 22 noch bearbeitet werden, insbesondere können die Stirnseiten 64 abgedreht oder geschliffen werden, um eine exakte Konusfläche zu erhalten.

Das Vorsehen der übereinander angeordneten Lamellen 62, welche das Zentrierelement 21 beziehungsweise den Konusabschnitt 22 bilden, hat den Vorteil, dass eine Axialverformung mit vergleichsweise geringen Kräften möglich ist, ohne dass eine Nachgiebigkeit in radialer Richtung gegeben wird. Die übereinander angeordneten Lamellen 62 weisen eine vergleichsweise hohe Steifigkeit in radialer Richtung auf.

In der Figur 7 ist ein Trägerbauteil 18 ausschnittsweise dargestellt, an dessen Unterseite ein Spannbolzen 12 und zwei Zentrierelemente 80 angeordnet sind. Zum Spannen des Trägerbauteils 18 an einem Spannmodul 10, wie es beispielsweise in der Figur 1 dargestellt ist, taucht der Spannbolzen 18 in eine entsprechende Bolzenaufnahme. Gleichzeitig tauchen die beiden Zentrierelemente 80 in am Spannmodul 14 oder einer Grundplatte eines Trägerbauteils vorgesehene Zentrieraufnahmen.

Die Zentrierelemente 80 sehen jeweils einen Konusabschnitt 22 vor, welcher in der Verriegelungslage an einem

Gegenkonusabschnitt 24 anliegt, der von den Zentrieraufnahmen gebildet wird. Die Konusabschnitte 22 werden dabei, entsprechend der Ausbildung gemäß Figur 2, 3 und 4 von aufeinander liegenden Lamellen 62 gebildet. Wird folglich das Trägerbauteil 18, beziehungsweise dessen Spannbolzen 12, mit einem Spannmodul 14 verriegelt, so liegen zunächst die Konusabschnitte 22 der Zentrierelemente 80 an den Gegenkonusabschnitten 24 der Zentrieraufnahmen an. Beim weiteren Verriegeln können die Konusabschnitte 22, beziehungsweise deren einzelnen Lamellen 62, derart in Richtung des Trägerbauteils 18 ausgelenkt werden, dass das Trägerbauteil 18 vollflächig an der Oberseite des Spannmoduls zum Anliegen kommt.

Aus Figur 7 und deren Beschreibung wird folglich deutlich, dass die Zentrierelemente 80 auch fern vom Spannbolzen 12, beziehungsweise von diesem in radialer Richtung liegend, beabstandet vorgesehen sein können. Die Zentrierelemente 80 können dabei, wie in Figur 7 gezeigt, am Trägerbauteil 18 vorgesehen sein. Erfindungsgemäß ist auch denkbar, dass die Zentrierelemente 80 an der Oberseite des Spannmoduls 14 vorgesehen werden. In diesem Fall sind dann die Gegenkonusabschnitte 24 aufweisenden Zentrieraufnahmen am Trägerteil 18 anzuordnen.

## Patentansprüche

1. Zentrierelement (21, 80) für ein ein Spannmodul (14) und ein Trägerbauteil (18) umfassendes Spannsystem (10), insbesondere ein Nullpunktspannsystems, wobei das Trägerbauteil (18) mit einer in axialer Richtung wirkenden Einzugskraft (32) gegen das Spannmodul (14) beaufschlagbar ist, umfassend einen Konusabschnitt (22) zur Anlage an einen Gegenkonusabschnitt (24), wobei der Konusabschnitt (22) derart in axialer Richtung elastisch nachgiebig ausgebildet ist, dass nach Anlage des Konusabschnitts (22) am Gegenkonusabschnitt (24) das Trägerbauteil (18) aufgrund der Einzugskraft (32) wenigstens bedingt weiter in axialer Richtung verlagerbar ist, **dadurch gekennzeichnet, dass** der Konusabschnitt (22) von parallel aufeinander liegenden Lamellen (62) gebildet wird, deren radial außen liegenden, freien Stirnseiten (64) zur Anlage an den Gegenkonusabschnitt (24) vorgesehen sind.

2. Zentrierelement (21, 80) nach Anspruch 1, **dadurch gekennzeichnet, dass** die einzelnen Lamellen (62) eine Dicke im Bereich von 0,1 bis 1 mm und insbesondere im Bereich von 0,3 bis 0,7 mm und weiter insbesondere etwa 0,5 mm betragen.

3. Zentrierelement (21, 80) nach Anspruch 1 oder 2, **dadurch gekennzeichnet, dass** die Anzahl der vorgesehenen Lamellen (62) im Bereich von 5 bis 20 und insbesondere im Bereich von 8 bis 15 und weiter insbesondere im Bereich von 10 bis 12 liegt.

4. Zentrierelement (21, 80) nach einem der vorherigen Ansprüche, **dadurch gekennzeichnet, dass** die Lamellen (62) jeweils ringartig ausgebildet sind und ein zentrales Loch aufweisen, in welche ein Bolzen zur Halterung der Lamellen (62) eingreift.

5. Spannbolzen (12, 50) zum Einspannen in ein Spannmodul (14), insbesondere ein Nullpunktspannmodul, mit einem Kraftangriffsabschnitt (26), der mit der in axialer Richtung wirkenden Spannkraft (32) beaufschlagbar ist, und mit einem Zentrierelement (21, 80) nach einem der vorherigen Ansprüche.

6. Spannbolzen (50) nach Anspruch 5, **dadurch gekennzeichnet, dass** der Spannbolzen (50) ein Grundteil (54) und ein mit dem Grundteil (54) gefügtes Spannteil (52) aufweist, wobei der Konusabschnitt (22) von parallel aufeinander liegenden Lamellen (62) gebildet wird, deren radial außen liegenden, freien Stirnseiten (64) zur Anlage an den Gegenkonusabschnitt (24) vorgesehen sind und wobei die Lamellen (62) wenigstens abschnittsweise zwischen dem Grundteil (54) und dem Spannteil (52) angeordnet sind.

7. Spannbolzen (50) nach Anspruch 6, **dadurch gekennzeichnet, dass** am Spannteil (52) der Kraftangriffsabschnitt (26) und am Grundteil (54) ein Fügeabschnitt (56) zur Anordnung des Spannbolzens (50) an einem Trägerbauteil (18) vorgesehen sind.

8. Spannbolzen (50) nach Anspruch 5, 6 oder 7, **dadurch gekennzeichnet, dass** das Spannteil (52) eine großflächige Auflagefläche (68) zur Auflage der dem Spannteil (52) zugewandten Lamelle (62) aufweist, wobei die Auflagefläche (68) eine radial äußere Kontur (72) vorsieht und dass das Grundteil (54) eine bezüglich der äußeren Kontur (72) weiter radial innen liegende, im wesentlichen ringartige Anlagefläche (70) vorsieht, um welche die der Anlagefläche (70) zugewandte Lamelle (62) elastisch nachgiebig verformbar ist.

9. Trägerbauteil (18) zum Spannen an ein Spannmodul (14), insbesondere ein Nullpunktspannmodul, mit einem Kraftangriffsabschnitt (26), der mit der in axialer Richtung wirkenden Spannkraft (32) zum Spannen des Spannbolzens (12, 50) im Spannmodul beaufschlagbar ist, und mit einem vom Kraftangriffsabschnitt (26) in radialer Richtung fern gelegenen Zentrierelement (80) nach einem der Ansprüche 1 bis 4.

10. Spannsystem (10), insbesondere Nullpunktspannsystem, umfassend ein Spannmodul (14), ein Trägerbauteil (18) und wenigstens ein Zentrierelement (21, 80) nach einem der vorherigen Ansprüche.

## Claims

1. A centering element (21, 80) for a tensioning system (10) including a tensioning module (14) and a supporting element (18), in particular a zero point tensioning system, in which the supporting element (18) can be urged toward the tensioning module (14) by an infeeding force (32) acting in the axial direction, including a conical portion (22) for contact with a counterpart conical portion (24), the conical portion (22) being embodied elastically resiliently in the axial direction such that after contact of the conical portion (22) with the counterpart conical portion (24), the supporting element (18), because of the infeeding force (32), is capable at least conditionally of being shifted farther in the axial direction, **characterized in that** the conical portion (22) is formed by laminations (62), located parallel to one another, whose radially outer free face ends (64) are provided for contact with the counterpart conical portion (24).

2. The centering element (21, 80) according to claim 1, **characterized in that** the individual laminations (62) have a thickness in the range from 0.1 to 1 mm and in particular in the range from 0.3 to 0.7 mm, and more particularly amounting to approximately 0.5 mm.

3. The centering element (21, 80) according to claim 1 or 2, **characterized in that** the number of laminations (62) provided is in the range from 5 to 20, and in particular in the range from 8 to 15, and more particularly in the range from 10 to 12.

4. The centering element (21, 80) according to one of the foregoing claims, **characterized in that** the laminations (62) are each embodied annularly and have a central hole, which is engaged by a bolt for retention of the laminations (62).

5. A tensioning bolt (12, 50) for fastening in a tensioning module (14), in particular a zero point tensioning module, having a force-engagement portion (26) that can be acted upon by the tensioning force (32) acting in the axial direction, and having a centering element (21, 80) according to one of the foregoing claims.

6. The tensioning bolt (50) according to claim 5, **characterized in that** the tensioning bolt (50) has a basic part (54) and a tensioning part (52) joined to the basic part (54), and the conical portion (22) is formed by laminations (62) located parallel to one another, whose radially outer free face ends (64) are provided for contact with the counterpart conical portion (24), and the laminations (62) are disposed in at least some portions between the basic part (54) and the tensioning part (52).

7. The tensioning bolt (50) according to claim 6, **characterized in that** the force-engagement portion (26) on the tensioning part (52) and a joining portion (56) on the basic part (54) are provided for disposing the tensioning bolt (50) on a supporting element (18).

8. The tensioning bolt (50) according to claim 5, 6 or 7, **characterized in that** the tensioning part (52) has a large-area bearing surface (68) for bearing the lamination (62) oriented toward the tensioning part (52), and the bearing surface (68) provides a radially outer contour (72); and that the basic part (54) provides a substantially annular contact face (70), located radially farther inward than the outer contour (72), about which contact face the lamination (62) oriented toward the contact face (70) is elastically resiliently deformable.

9. A supporting element (18) for tensioning against a tensioning module (14), in particular a zero point tensioning module, having a force-engagement portion (26), which can be subjected to the tensioning force (32), acting in the axial direction, for tensioning the tensioning bolt (12, 50) in the tensioning module, and having a centering element (80) according to one of claims 1-4 that is located remotely in the radial direction from the force-engagement portion (26).

10. A tensioning system (10), in particular a zero point tensioning system, including a tensioning module (14), a supporting element (18) and at least one centering element (21, 80) according to one of the foregoing claims.

## Revendications

1. Elément de centrage (21, 80) pour un système de serrage (10) comprenant un module de serrage (14) et un élément de support (18), en particulier un système de serrage au point zéro, l'élément de support (18) pouvant être sollicité contre le module de serrage (14) avec une force de traction (32) agissant dans le sens axial, comprenant une section conique (22) venant s'installer au niveau d'une section conique opposée (24), la section conique (22) étant réalisée déformable élastiquement dans le sens axial de façon à ce que, après l'installation de la section conique (22) sur la section conique opposée (24), l'élément de support (18), du fait de la force de traction (32), puisse être déplacé dans le sens axial, **caractérisé en ce que** la section conique (22) est formée par des lamelles (62) agencées parallèlement entre elles, dont les faces frontales (64) libres situées radialement à l'extérieur sont prévues pour venir s'installer au niveau de la section conique opposée (24).

2. Elément de centrage (21, 80) selon la revendication 1, **caractérisé en ce que** les différentes lamelles (62) représentent une épaisseur comprise entre 0,1 et 1 mm, en particulier entre 0,3 et 0,7 mm et plus particulièrement une épaisseur d'environ 0,5 mm.

3. Elément de centrage (21, 80) selon la revendication 1 ou 2, **caractérisé en ce que** le nombre de lamelles prévues (62) est compris entre 5 et 20, en particulier entre 8 et 15, et plus particulièrement entre 10 et 12.

4. Elément de centrage (21, 80) selon l'une des revendications précédentes, **caractérisé en ce que** les lamelles (62) sont toutes réalisées circulaires et présentent un trou central, dans lequel vient s'enclencher un boulon pour soutenir les lamelles (62).

5. Boulon de serrage (12, 50) pour serrer dans un module de serrage (14), en particulier un module de serrage au point zéro, comprenant une section d'application de force (26) pouvant être sollicitée avec la force de serrage (32) agissant dans le sens axial, et comprenant un élément de centrage (21, 80) selon l'une des revendications précédentes.

6. Boulon de serrage (50) selon la revendication 5, **caractérisé en ce que** le boulon de serrage (50) présente un élément de base (54) et un élément de serrage (52) fixé à l'élément de base (54), la section conique (22) étant formée par des lamelles (62) agencées parallèlement entre elles, dont les faces frontales (64) libres situées radialement à l'extérieur sont prévues pour l'agencement au niveau de la section conique opposée (24), et les lamelles (62) étant agencées au moins en partie entre l'élément de base (54) et l'élément de serrage (52).

7. Boulon de serrage (50) selon la revendication 6, **caractérisé en ce qu'**il est prévu au niveau de l'élément de serrage (52) la section d'application de force (26), et au niveau de l'élément de base (54) une section d'assemblage (56) pour l'agencement du boulon de serrage (50) au niveau d'un élément de support (18).

8. Boulon de serrage (50) selon la revendication 5, 6 ou 7, **caractérisé en ce que** l'élément de serrage (52) présente une grande surface d'appui (68) pour le support de la lamelle (62) orientée vers l'élément de serrage (52), la surface d'appui (68) prévoyant un contour extérieur radial (72), et **en ce que** l'élément de base (54) prévoit une surface d'appui (70) essentiellement circulaire située radialement à l'intérieur par rapport au contour extérieur (72) autour de laquelle la lamelle (62) orientée vers la surface d'appui (70) peut être déformée élastiquement.

9. Elément de support (18) pour le serrage au niveau d'un module de serrage (14), en particulier un module de serrage au point zéro, comprenant une section d'application de force (26) pouvant être sollicitée avec la force de serrage (32) agissant dans le sens axial pour serrer le boulon de serrage (12, 50) dans le module de serrage, et comprenant un élément de centrage (80) selon l'une des revendications 1 à 4 positionné à distance dans le sens axial de l'élément d'application de force (26).

10. Système de serrage (10), en particulier système de serrage au point zéro, comprenant un module de serrage (14), un élément de support (18) et au moins un élément de centrage (21, 80) selon l'une des revendications précédentes.
